# EUROPÄISCHE PATENTANMELDUNG

(11) **EP 2 036 645 A2**
(43) Veröffentlichungstag der Anmeldung: **18.03.2009**
(21) Anmeldenummer: 08016008.8
(22) Anmeldetag: 11.09.2008
(51) Int. Cl.: B23F 23/08, B23F 23/12, B23F 19/05

(54) **Schlittenanordnung für eine Werkzeugmaschine**

(30) Priorität: 14.09.2007 DE 202007012868 U
(71) Anmelder: THE GLEASON WORKS, Rochester, New York 14607-1282 (US)
(72) Erfinder: Gampe, Uwe, 85579 Neubiberg (DE)
(74) Vertreter: Leinweber & Zimmermann

(57) **Zusammenfassung**

Die Erfindung betrifft eine Schlittenanordnung für eine Werkzeugmaschine mit einem längs einer ersten Bewegungsachse verstellbaren ersten Schlitten (1), durch dessen Verstellbewegung (5) ein auf dem ersten Schlitten (1) abgestütztes Werkstück zwischen einer ersten Position und einer zweiten Position verstellbar ist und mit einem längs einer zweiten Bewegungsachse verstellbaren zweiten Schlitten (10), durch dessen Verstellbewegung (11) ein auf dem zweiten Schlitten (10) abgestützter Meßfühler zwischen einer an der ersten Position des Werkstücks angenäherten Meßposition und einer von der Meßposition abgerückten Ruheposition verstellbar ist, sodaß eine von der Verstellbewegung des ersten Schlittens angetriebene Betätigungsvorrichtung (6,13,14) vorgesehen ist, durch die infolge der Verstellbewegung (5) des ersten Schlittens (1) von der ersten Position in die zweite Position die Verstellbewegung (11) des zweiten Schlittens (10) von der Meßposition in die Ruheposition und infolge der Verstellbewegung (5) des ersten Schlittens (1) von der zweiten Position in die erste Position die Verstellbewegung (11) des zweiten Schlittens (10) von der Ruheposition in die Meßposition antreibbar ist.

## Beschreibung

Die Erfindung bezieht sich auf eine Schlittenanordnung für eine Werkzeugmaschine mit einem längs einer ersten Bewegungsachse verstellbaren ersten Schlitten, durch dessen Verstellbewegung ein auf dem ersten Schlitten abgestütztes Werkstück zwischen einer ersten Position und einer zweiten Position verstellbar ist und mit einem längs einer zweiten Bewegungsachse verstellbaren zweiten Schlitten, durch dessen Verstellbewegung ein auf dem zweiten Schlitten abgestützter Meßfühler zwischen einer an die erste Position des Werkstücks angenäherten Meßposition und einer von der Meßposition abgerückten Ruheposition verstellbar ist.

Derartige Schlittenanordnungen finden insbesondere in Werkzeugmaschinen Anwendung, die zur Feinbearbeitung von Zahnradrohlingen dienen. Für diese Werkstücke ist eine Indexierung, d.h. eine Erfassung ihrer Drehposition durch den Meßfühler, erforderlich, damit eine für die Feinbearbeitung geeignete Relativstellung zwischen dem Werkstück und einem Bearbeitungswerkzeug, beispielsweise einem Honrad, eingestellt werden kann. Dabei ist üblicherweise der das Werkstück bildende Zahnradrohling auf einer drehend antreibbaren Arbeitsspindel aufgespannt, welche auf dem ersten Schlitten abgestützt ist.

Für diese Indexierung wird der das Werkstück abstützende erste Schlitten in seine erste Position gebracht und der den Indexiersensor bildende Meßfühler sehr dicht an das Werkstück herangeführt, indem der den Meßfühler tragende zweite Schlitten in seine Meßposition verstellt wird. Nach der Indexierung muß der zweite Schlitten in seine von der Meßposition abgerückte Ruheposition zurückgezogen werden, damit das Werkstück auf dem ersten Schlitten für seine Feinbearbeitung in die zweite Position überführt werden kann, ohne daß es bei dieser Verstellbewegung zu einer Kollision zwischen dem Meßfühler und dem Werkstück, der das Werkstück aufspannenden Spannvorrichtung oder dem das Werkstück tragenden ersten Schlitten kommt. Dies schließt insbesondere auch den Fall ein, daß der erste Schlitten zunächst in eine Bestückungsposition verstellt wird, in der das Werkstück aufgespannt wird, und erst anschließend in seine erste Position verstellt wird. Dabei kann vorgesehen sein, daß der den Meßfühler tragende zweite Schlitten währenddessen in seiner Ruheposition verbleibt, um eine etwaige Kollision, beispielsweise mit einer Störkontur des aufgespannten Werkstücks, zu vermeiden, und erst danach in seine Meßposition nahe dem in der ersten Position angelangten Werkstück verstellt wird.

Herkömmlich werden diese Verstellbewegungen durch einen elektrischen, pneumatischen oder hydraulischen Antrieb realisiert. Um sicherzustellen, daß sich dabei der Meßfühler nicht im Kollisionsbereich befindet, wird die Momentanposition des den Meßfühler tragenden zweiten Schlittens von Positionssensoren abgefragt. Die Verstellbewegung des das Werkstück tragenden ersten Schlittens von seiner ersten Stellung, in der die Indexierung durchgeführt worden ist, und seiner zweiten Stellung, von der aus das Werkstück mit dem Bearbeitungswerkzeug in Eingriff gebracht wird, wird erst dann gestartet, wenn die den zweiten Schlitten überwachenden Positionssensoren ein Freigabesignal abgeben. Somit erfolgen das Zurückziehen des Meßfühlers aus seiner Meßposition und das Vorfahren des Werkstücks in seine zweite Position zeitlich nacheinander. Dies bedingt bei einem seriellen Ablauf des Zurückziehens des zweiten Schlittens und des Vorfahrens des ersten Schlittens eine Nebenzeit, die der Summe der für die Verstellbewegung des zweiten Schlittens zwischen der Meßposition und der Ruheposition und der Verstellbewegung des ersten Schlittens zwischen der ersten und der zweiten Position erforderlichen Zeiten entspricht.

Der Erfindung liegt die Aufgabe zugrunde, eine Schlittenanordnung der eingangs genannten Art derart auszubilden, daß diese Nebenzeiten verkürzt werden.

Erfindungsgemäß wird diese Aufgabe dadurch gelöst, daß eine von der Verstellbewegung des ersten Schlittens angetriebene Betätigungsvorrichtung vorgesehen ist, durch die infolge der Verstellbewegung des ersten Schlittens von der ersten Position in die zweite Position die Verstellbewegung des zweiten Schlittens von der Meßposition in die Ruheposition und infolge der Verstellbewegung des ersten Schlittens von der zweiten Position in die erste Position die Verstellbewegung des zweiten Schlittens von der Ruheposition in die Meßposition antreibbar ist.

Durch die erfindungsgemäße Lösung werden der Vorgang der Verstellung des Meßfühlers zwischen seiner Meßposition und seiner Ruheposition und der Vorgang der Verstellung des Werkstücks zwischen seiner ersten und seiner zweiten Position parallelisiert. Die erfindungsgemäß vorgesehene Betätigungsvorrichtung bewirkt eine mechanisch zwangsgeführte Kopplung der Verstellbewegungen der beiden Schlitten. Dadurch wird die Rückzugsbewegung des den Meßfühler abstützenden zweiten Schlittens von der Vorschubbewegung des das Werkstück tragenden ersten Schlittens derart zwangsgesteuert, daß mit der Vorschubbewegung des ersten Schlittens der zweite Schlitten zwangsläufig aus dem Kollisionsbereich zurückgezogen wird.

Die Erfindung ist insbesondere für den Fall anwendbar, daß die erste Bewegungsachse und die zweite Bewegungsachse linear und zueinander orthogonal sind. Dabei wird die lineare Verstellbewegung des ersten Schlittens durch die Betätigungsvorrichtung in eine dazu orthogonale, seitliche Verstellbewegung des zweiten Schlittens umgesetzt. Beispielsweise ist das Werkstück auf eine auf dem ersten Schlitten abgestützte, drehend antreibbare Arbeitsspindel aufgespannt, deren Spindelachse sich parallel zur ersten Bewegungsachse erstreckt. Der den Meßfühler tragende zweite Schlitten weicht dann bei einer Vorschubbewegung des Werkstücks orthogonal zur Spindelachse seitlich aus.

In einer zweckmäßigen Ausführungsform ist vorgesehen, daß die Betätigungsvorrichtung eine an dem ersten Schlitten festgelegte Kurvenbahn und eine einen ersten Hebelarm, einen zweiten Hebelarm und eine gegenüber den beiden Schlitten stationäre Schwenkachse aufweisende Hebelanordnung aufweist, deren erster Hebelarm infolge der Verstellbewegung des ersten Schlittens von der Kurvenbahn verschwenkt wird und deren zweiter Hebelarm dadurch die Verstellbewegung des zweiten Schlittens antreibt. Durch die sich entsprechend der Verstellbewegung des ersten Schlittens in Bezug auf die stationäre Schwenkachse der Hebelanordnung verändernde Lage der Kurvenbahn erfährt der erste Hebelarm eine entsprechende Verschwenkung, die durch den zweiten Hebelarm in eine entsprechende Antriebsbewegung für den zweiten Schlitten umgesetzt wird. Wenn die erste Bewegungsachse linear ist, kann beispielsweise die Kurvenbahn zwei zur ersten Bewegungsachse parallele, jedoch in unterschiedlichen Abständen von dieser angeordnete Bahnabschnitte aufweisen, die durch einen rampenförmigen Bahnabschnitt miteinander verbunden sind. In diesem Fall bestimmen die beiden zur ersten Bewegungsachse parallelen Bahnabschnitte die beiden Endpositionen der Verschwenkung des ersten Hebelarms, während die Einwirkung des rampenförmigen Bahnabschnitts die Verschwenkung zwischen diesen beiden Endpositionen bewirkt.

Die Vermittlung der Einwirkung der Kurvenbahn auf den ersten Hebelarm erfolgt vorteilhaft dadurch, daß der erste Hebelarm eine daran drehbar gelagerte und sich auf der Kurvenbahn abwälzende Rolle aufweist. Dabei kann die Kurvenbahn beispielsweise derart ausgebildet sein, daß sie die Rolle zwischen zwei zueinander gleichförmigen Steuerkurven zwangsführt. Dagegen besteht eine besonders einfache Alternative darin, daß die Rolle durch eine ein um die Schwenkachse wirkendes Torsionsmoment erzeugende Feder mit der Kurvenbahn in Eingriff gehalten wird. Ferner kann es für die Führungsfunktion der Kurvenbahn vorteilhaft sein, statt nur einer Rolle mehrere Rollen vorzusehen.

Die räumliche Ausrichtung der Schwenkachse der Hebelanordnung kann je nach den baulichen Erfordernissen der Werkzeugmaschine weitgehend frei gewählt werden und unterliegt lediglich der Einschränkung, daß aus der Schwenkbewegung des zweiten Hebelarms eine längs der zweiten Bewegungsachse wirksame Bewegungskomponente ableitbar sein muß. Eine in diesem Rahmen zweckmäßige Ausführungsform besteht darin, daß die Schwenkachse orthogonal zur ersten und zweiten Bewegungsachse angeordnet ist. Andererseits kann in einer zweckmäßigen Alternative vorgesehen sein, daß die Schwenkachse parallel zur ersten Bewegungsachse angeordnet ist.

Ebenso besteht hinsichtlich der Ebenen, in denen die Verschwenkbewegung der beiden Hebelarme stattfindet, eine weitgehende Wahlfreiheit, die eine Anpassung an die jeweiligen baulichen Gegebenheiten der Werkzeugmaschine ermöglicht. Insbesondere zeichnet sich eine zweckmäßige Ausführungsform dadurch aus, daß der erste und der zweite Hebelarm in der Richtung der Schwenkachse voneinander beabstandet sind.

In der folgenden Beschreibung wird die Erfindung anhand von zwei Ausführungsformen unter Bezugnahme auf die Zeichnung beispielhaft erläutert. Es zeigen:
- Fig. 1: eine schematische Darstellung einer ersten Ausführungsform, und
- Fig. 2: eine etwas detailliertere Teildarstellung einer zweiten Ausführungsform.

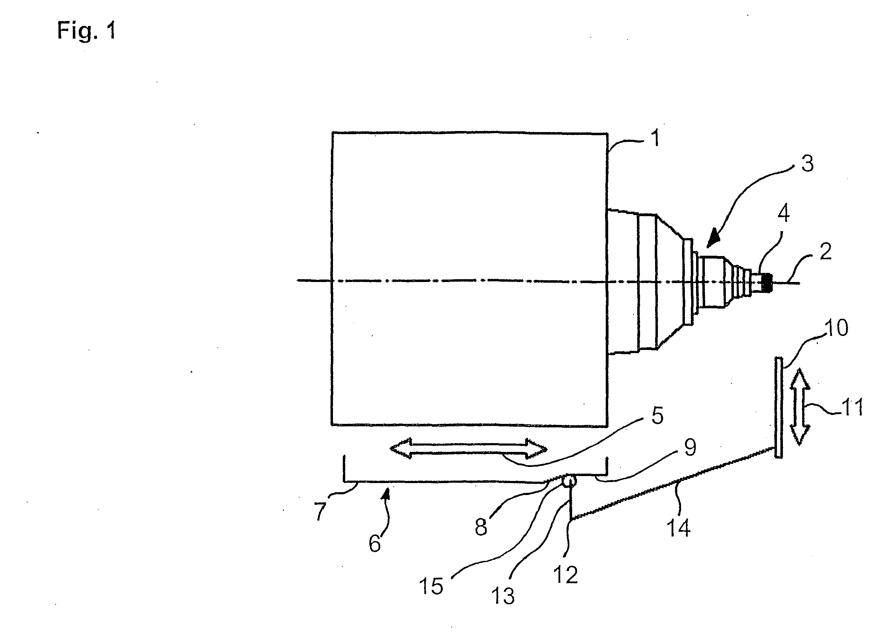

Bei einer in Fig. 1 dargestellten ersten Ausführungsform ist auf einem schematisch dargestellten ersten Schlitten 1 eine um eine Spindelachse 2 drehend antreibbare Arbeitsspindel 3 angeordnet, deren eines axiale Ende eine Aufspannvorrichtung 4 für ein Werkstück, beispielsweise in Form eines Zahnradrohlings oder eines verzahnten Wellenrohlings, aufweist. Der erste Schlitten 1 ist längs einer linearen ersten Bewegungsachse zwischen einer ersten Position und einer zweiten Position verstellbar. Die Verstellbewegung längs der zur Spindelachse 2 parallelen ersten Bewegungsachse ist durch einen Doppelpfeil 5 angedeutet.

An dem ersten Schlitten 1 ist eine schematisch angedeutete Kurvenbahn 6 befestigt, die einen zu der ersten Bewegungsachse parallelen ersten Bahnabschnitt 7, einen daran anschließenden, zu der ersten Bewegungsachse geneigten rampenförmigen Bahnabschnitt 8 und einen daran anschließenden, zu der ersten Bewegungsachse parallelen zweiten Bahnabschnitt 9 aufweist. Der zweite Bahnabschnitt 9 weist einen geringeren Abstand zu der Spindelachse 2 auf als der erste Bahnabschnitt 7.

Ein schematisch angedeuteter zweiter Schlitten 10, der zur Abstützung eines Meßfühlers (nicht dargestellt) dient, ist längs einer zu der ersten Bewegungsachse orthogonalen, linearen zweiten Bewegungsachse zwischen einer Meßposition und einer von der Meßposition abgerückten Ruheposition verstellbar. Die Verstellbewegung des zweiten Schlittens 10 längs der zweiten Bewegungsachse ist durch einen Doppelpfeil 11 angedeutet.

Eine um eine zu der ersten und der zweiten Bewegungsachse orthogonale Schwenkachse 12 verschwenkbare Hebelanordnung weist einen ersten Hebelarm 13 und einen zweiten Hebelarm 14 auf. Der erste Hebelarm 13 erstreckt sich von der in Bezug auf den ersten Schlitten 1 und den zweiten Schlitten 10 stationären Schwenkachse 12 in Richtung auf die Kurvenbahn 6 und ist an seinem zur Kurvenbahn 6 weisenden Ende mit einer daran drehbar gelagerten Rolle 15 versehen, deren Drehachse parallel zur Schwenkachse 12 verläuft. Die Rolle 15 wird durch ein geeignetes Mittel, beispielsweise eine die Hebelanordnung in Bezug auf die Schwenkachse 12 im Uhrzeigersinn mit einer Torsionskraft belastende Feder (nicht dargestellt), an der Kurvenbahn 6 in Anlage gehalten.

Der zweite Hebelarm 14 erstreckt sich von der Schwenkachse 12 zu dem zweiten Schlitten 10 und ist an diesem derart angelenkt, daß er einer Verschwenkung des zweiten Hebelarms 14 durch eine längs des Doppelpfeils 11 gerichtete Verstellbewegung folgt.

In Fig. 1 befindet sich der erste Schlitten 1 in seiner ersten Position, wobei auf der Aufspannvorrichtung 4 ein zu bearbeitender Zahnradrohling (nicht dargestellt) aufgespannt ist. Der den Meßfühler (nicht dargestellt) bildende, auf dem zweiten Schlitten 10 abgestützte Indexiersensor befindet sich in seiner an das Werkstück angenäherten Meßposition, in der der Indexiervorgang ausgeführt wird. Nach der Beendigung des Indexiervorgangs wird der erste Schlitten 1 von seinem Bewegungsantrieb (nicht dargestellt) längs der ersten Bewegungsachse in Richtung auf die gegenüber der in Fig. 1 dargestellten ersten Position weiter rechts liegende zweite Position verstellt. Dadurch läuft die vorher an dem zweiten Bahnabschnitt 9 der Kurvenbahn 6 anliegende Rolle 15 auf den sich in Fig. 1 nach rechts bewegenden rampenförmigen Bahnabschnitt 8 auf. Dadurch wird der erste Hebelarm 13 um die Schwenkachse 12 im Uhrzeigersinn verschwenkt und der zweite Schlitten 10 durch die dem Übersetzungsverhältnis der Hebelanordnung entsprechende Verstellbewegung des zweiten Hebelarms 14 gegenüber der Spindelachse 2 zurückgezogen, bis er nach Durchlauf der Rolle 15 durch den rampenförmigen Bahnabschnitt 8 die durch die Anlage der Rolle 15 an dem sich anschließenden ersten Bahnabschnitt 7 bestimmte Ruheposition erreicht hat. In dieser ist der zweite Schlitten 10 mit dem Meßfühler so weit von der Spindelachse 2 abgerückt, daß eine Kollision mit sich in Folge der Verstellbewegung 5 des ersten Schlittens 1 nach rechts bewegenden Teilen ausgeschlossen ist.

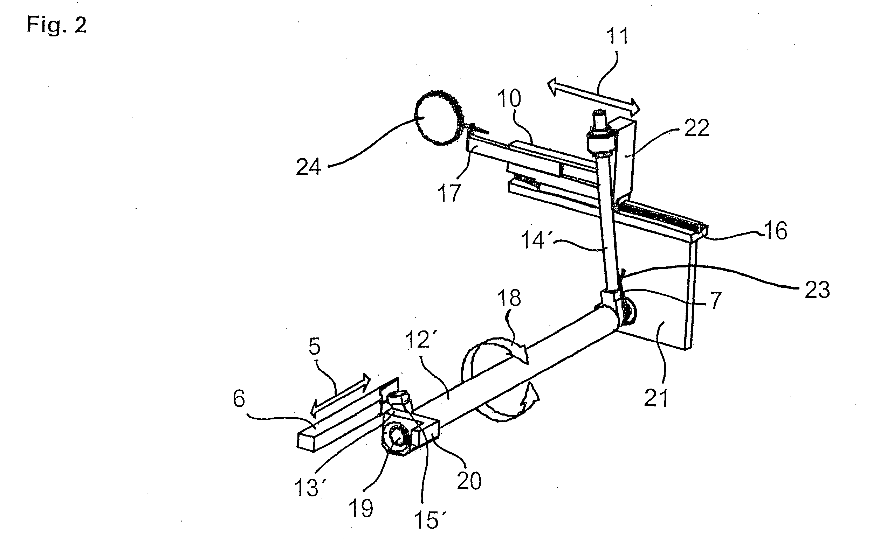

Eine in Fig. 2 dargestellte zweite Ausführungsform weist ebenfalls die in Fig. 1 anhand der Bezugszeichen 1 bis 11 erläuterte Ausgestaltung auf. Jedoch ist in Fig. 2 lediglich die der Verstellbewegung 5 des ersten Schlittens 1 folgende Kurvenbahn 6 dargestellt. Die Darstellung des zweiten Schlittens 10 ist in Fig. 2 gegenüber Fig. 1 durch die Darstellung seiner stationären Führungsbahn 16, durch die er gemäß seiner Verstellbewegung 11 längs der zweiten Bewegungsachse geführt ist, ergänzt. Weiterhin sind in Fig. 2 zusätzlich die Halterung 17 des Meßfühlers an dem zweiten Schlitten 10 und das Werkstück 24 angedeutet.

Der Unterschied gegenüber der in Fig. 1 dargestellten Ausführungsform besteht im wesentlichen darin, daß die Schwenkachse 12' parallel zur ersten Bewegungsachse angeordnet ist. Die um die Schwenkachse 12' herum erfolgende Schwenkbewegung ist durch einen Doppelpfeil 18 veranschaulicht. Das die Schwenkachse 12' bildende stabförmige Teil ist an seinem zur Kurvenbahn 6 weisenden axialen Ende 19 in einem stationären Lager 20 und an seinem dazu entgegengesetzten axialen Ende in einer die Führungsbahn 16 abstützenden stationären Lagerplatte 21 drehbar gelagert. An dem zur Kurvenbahn 6 weisenden axialen Ende ist der sich in Bezug auf die Schwenkachse 12' radial erstreckende erste Hebelarm 13' angeordnet, an dessen freiem Ende die mit der Kurvenbahn 6 in Eingriff stehende Rolle 15' drehbar gelagert ist.

Der zweite Hebelarm 14' erstreckt sich von dem dem axialen Ende 19 entgegengesetzten axialen Ende des die Schwenkachse 12' bildenden stabförmigen Teils aus radial bis zu einem an dem zweiten Schlitten 10 befestigten Teil 22, in dem ein zur zweiten Bewegungsachse orthogonaler Führungsschlitz ausgebildet ist. In diesem Führungsschlitz wird ein an dem zweiten Hebelarm 14' festgelegter Führungsbolzen geführt. Der Führungsschlitz nimmt die zur zweiten Bewegungsbahn orthogonale Bewegungskomponente der Schwenkbewegung des zweiten Hebelarms 14' auf, während die zur zweiten Bewegungsachse parallele Komponente dieser Schwenkbewegung eine entsprechende Verstellbewegung des zweiten Schlittens 10 hervorruft. In funktioneller Hinsicht wird also mit der in Fig. 2 skizzierten Hebelanordnung dasselbe Ergebnis erreicht, wie es für die in Fig. 1 dargestellte erste Ausführungsform erläutert worden ist.

In Fig. 1 ist auch die um die Schwenkachse 12' zentrierte Torsionsfeder 23 erkennbar, deren eines Ende an dem zweiten Hebelarm 14' und deren anderes Ende an der stationären Lagerplatte 21 abgestützt ist, so daß sie ein Drehmoment ausübt, durch das die Rolle 15' an der Kurvenbahn 6 in Anlage gehalten wird.

### Verzeichnis der Bezugszeichen

- 1: erster Schlitten
- 2: Spindelachse
- 3: Arbeitsspindel
- 4: Aufspannvorrichtung
- 5: Doppelpfeil / Verstellbewegung
- 6: Kurvenbahn
- 7: erster Bahnabschnitt
- 8: rampenförmiger Bahnabschnitt
- 9: zweiter Bahnabschnitt
- 10: zweiter Schlitten
- 11: Doppelpfeil / Verstellbewegung
- 12, 12': Schwenkachse
- 13, 13': erster Hebelarm
- 14, 14': zweiter Hebelarm
- 15, 15': Rolle
- 16: Führungsbahn
- 17: Halterung
- 18: Doppelpfeil / Schwenkbewegung
- 19: axiales Ende
- 20: stationäres Lager
- 21: stationäre Lagerplatte
- 22: Teil
- 23: Torsionsfeder
- 24: Werkstück

## Patentansprüche

1. Schlittenanordnung für eine Werkzeugmaschine mit einem längs einer ersten Bewegungsachse verstellbaren ersten Schlitten (1), durch dessen Verstellbewegung (5) ein auf dem ersten Schlitten (1) abgestütztes Werkstück zwischen einer ersten Position und einer zweiten Position verstellbar ist und mit einem längs einer zweiten Bewegungsachse verstellbaren zweiten Schlitten (10), durch dessen Verstellbewegung (11) ein auf dem zweiten Schlitten (10) abgestützter Meßfühler zwischen einer an die erste Position des Werkstücks angenäherten Meßposition und einer von der Meßposition abgerückten Ruheposition verstellbar ist, **dadurch gekennzeichnet, daß** eine von der Verstellbewegung des ersten Schlittens (1) angetriebene Betätigungsvorrichtung (6, 13, 13', 14, 14') vorgesehen ist, durch die infolge der Verstellbewegung (5) des ersten Schlittens (1) von der ersten Position in die zweite Position die Verstellbewegung (11) des zweiten Schlittens (10) von der Meßposition in die Ruheposition und infolge der Verstellbewegung (5) des ersten Schlittens (1) von der zweiten Position in die erste Position die Verstellbewegung (11) des zweiten Schlittens (10) von der Ruheposition in die Meßposition antreibbar ist.

2. Schlittenanordnung nach Anspruch 1, **dadurch gekennzeichnet, daß** die erste Bewegungsachse und die zweite Bewegungsachse linear und zueinander orthogonal sind.

3. Schlittenanordnung nach Anspruch 2, **dadurch gekennzeichnet, daß** die Betätigungsvorrichtung eine an dem ersten Schlitten (1) festgelegte Kurvenbahn (6) und eine einen ersten Hebelarm (13, 13'), einen zweiten Hebelarm (14, 14') und eine gegenüber den beiden Schlitten (1, 10) stationäre Schwenkachse (12, 12') aufweisende Hebelanordnung aufweist, deren erster Hebelarm (13, 13') infolge der Verstellbewegung (5) des ersten Schlittens (1) von der Kurvenbahn (6) verschwenkt wird und deren zweiter Hebelarm (14, 14') **dadurch** die Verstellbewegung (11) des zweiten Schlittens (10) antreibt.

4. Schlittenanordnung nach Anspruch 3, **dadurch gekennzeichnet, daß** der erste Hebelarm (13, 13') eine daran drehbar gelagerte und sich auf der Kurvenbahn (6) abwälzende Rolle (15, 15') aufweist.

5. Schlittenanordnung nach Anspruch 4, **dadurch gekennzeichnet, daß** die Rolle (15, 15') durch eine ein um die Schwenkachse (12, 12') wirkendes Torsionsmoment erzeugende Feder (23) mit der Kurvenbahn (6) in Eingriff gehalten wird.

6. Schlittenanordnung nach einem der Ansprüche 3 bis 5, **dadurch gekennzeichnet, daß** die Schwenkachse (12) orthogonal zur ersten und zweiten Bewegungsachse angeordnet ist.

7. Schlittenanordnung nach einem der Ansprüche 3 bis 5, **dadurch gekennzeichnet, daß** die Schwenkachse (12') parallel zur ersten Bewegungsachse angeordnet ist.

8. Schlittenanordnung nach einem der Ansprüche 3 bis 7, **dadurch gekennzeichnet, daß** der erste (13') und der zweite (14') Hebelarm in der Richtung der Schwenkachse (12') voneinander beabstandet sind.

9. Schlittenanordnung nach einem der Ansprüche 1 bis 8, **dadurch gekennzeichnet, daß** das Werkstück auf einer auf dem ersten Schlitten (1) abgestützten Arbeitsspindel (3) aufgespannt ist.

10. Schlittenanordnung nach einem der Ansprüche 1 bis 9, **dadurch gekennzeichnet, daß** der Meßfühler ein der Erfassung der Drehposition des Werkstücks dienender Indexiersensor ist.
